# EUROPÄISCHE PATENTSCHRIFT

(11) **EP 2 567 424 B1**
(45) Veröffentlichungstag und Bekanntmachung des Hinweises auf die Patenterteilung: **19.08.2015**
(21) Anmeldenummer: 11717523.2
(22) Anmeldetag: 18.04.2011
(51) Int. Cl.: F25B 21/02, H01L 35/00, H01G 9/00, H01G 9/08, H01G 2/08, H01G 4/38, H01G 11/72, H01G 11/82, H01M 10/613, H01M 10/625, H01M 10/6562, H01M 10/6568, H01M 10/6572, H01M 10/635

(54) **ELEKTRISCHER ENERGIESPEICHER MIT KÜHLVORRICHTUNG**
ELECTRICAL ENERGY STORE WITH COOLING DEVICE
ACCUMULATEUR D'ÉNERGIE ÉLECTRIQUE AVEC UN DISPOSITIF DE REFROIDISSEMENT

(30) Priorität: 23.09.2010 DE 102010041277; 07.05.2010 DE 102010028728
(43) Veröffentlichungstag der Anmeldung: 13.03.2013
(73) Patentinhaber: Siemens Aktiengesellschaft, 80333 München (DE)
(72) Erfinder: HUBER, Norbert, 91056 Erlangen (DE); MEINERT, Michael, 91056 Erlangen (DE); RASTOGI, Armin, 91056 Erlangen-Hüttendorf (DE)
(86) Internationale Anmeldenummer: PCT/EP2011/056078
(87) Internationale Veröffentlichungsnummer: WO 2011/138156

(56) Entgegenhaltungen:
- JP-A- 8 148 189
- US-A1- 2003 064 283
- US-A1- 2007 248 876

## Beschreibung

Die Erfindung betrifft einen elektrischen Energiespeicher, insbesondere für ein Antriebssystem.

Vorrichtungen zur Speicherung von elektrischer Energie, auch als "Energiespeicher" bezeichnet, werden z.B. bei elektrisch betriebenen Straßenbahnen eingesetzt, um einen vorübergehenden Betrieb in einem Abschnitt ohne Oberleitungen und damit ohne eine externe Strom- und Spannungsversorgung zu ermöglichen. Ein weiterer möglicher Einsatz ist die Zwischenspeicherung von Bremsenergie. Die Energiespeicherung kann z.B. auf elektrostatische Weise mit Hilfe von Doppelschichtkondensatoren erfolgen. Der Betrieb derartiger Energiespeicher ist in der Regel mit einer Wärmeentwicklung (Verlustwärme) verbunden. Um die entstehende Wärmemenge zuverlässig und effizient abzuführen und infolgedessen eine sichere Betriebsweise und eine hohe Lebensdauer der Energiespeicher zu gewährleisten, können Flüssigkeitskühlungen zum Einsatz kommen. Hierbei sind die zu kühlenden Leistungskomponenten (d.h. die eigentlichen Einrichtungen zur Energiespeicherung, wie z.B. Doppelschichtkondensatoren) thermisch an Flüssigkeitskühlkörper angebunden, welche von einem Kühlmedium bzw. Kühlmittel, wie z.B. Wasser, durchströmt werden können.

Die minimale Temperatur, auf welche Leistungskomponenten durch Einsatz einer Flüssigkeitskühlung abgekühlt werden können, ist die Temperatur des Kühlmittels. Ohne eine aktive Rückkühlung bzw. ohne Einsatz einer Kältemaschine ("Chiller") ist dies die Umgebungstemperatur plus einem Temperaturhub, welcher abhängig ist von der Wärmetauscherfläche eines eingesetzten Rückkühlers. In heißen geographischen Bereichen kann die Umgebungstemperatur jedoch unter Umständen so hoch sein, dass die Kühlung der Energiespeicher nicht ausreichend ist, was mit Problemen, wie z.B. einer Überschreitung zulässiger Temperaturen der Energiespeicher oder einer (zu) kurzen Lebensdauer der Energiespeicher, verbunden ist.

Zwar besteht die Möglichkeit, eine zusätzliche Kältemaschine als aktiven Rückkühler zu verwenden, wodurch das eingesetzte Kühlmittel unter die Umgebungstemperatur abgekühlt wird. Mit dem auf diese Weise "unterkühlten" Kühlmittel können die Leistungskomponenten temperiert werden, um die beim Betrieb auftretende Verlustwärme abzuführen. Dieser Ansatz führt jedoch dazu, dass sich die Kosten und die Dimensionen (Platzbedarf, Masse) des betreffenden Kühlsystems vergrößern. Beispielsweise könnte zur zusätzlichen Kühlung von Doppelschichtkondensatoren einer Straßenbahn eine Kältemaschine mit einer Kälteleistung von ca. 10 kW eingesetzt werden, welche jedoch etwa 200 kg wiegen und ca. 1 m³ Raum benötigen würde.

Aus dem Stand der Technik ist es bekannt, zur Kühlung von Bauteilen bzw. Baugruppen sog. Peltier-Elemente zu verwenden. Diese Elemente beruhen auf dem an sich bekannten Peltier-Effekt und stellen elektrothermische Wandler dar, welche bei Bestromung eine Temperaturdifferenz erzeugen. Ein Peltier-Element weist dabei eine erste, sich bei Stromfluss abkühlende Seite und eine zweite, gegenüberliegende Seite auf, welche sich bei Bestromung erwärmt. In der Regel umfassen Peltier-Elemente zwei Halbleiter mit unterschiedlichen Energieniveaus, welche an einer Vielzahl von Kontaktstellen durch Metallbrücken miteinander verbunden sind.

In der Druckschrift DE 10 2005 036 492 A1 wird die Verwendung eines Peltier-Elements zum Kühlen und Heizen von Innenräumen beschrieben. Dabei arbeitet das Peltier-Element als Wärmepumpe. Die im Betrieb des Peltier-Elements auf dessen warmen Seite generierte Wärme wird über einen Wasserkreislauf und einen Rückkühler abgeführt. Die auf der kalten Seite des Peltier-Elements erzeugte Kühlleistung wird über einen weiteren Wasserkreislauf durch einen Wärmetauscher in einem zu kühlenden Innenraum abgegeben.

Ferner ist aus der Druckschrift JP 08148189 ein Energiespeicher für ein Antriebssystem mit einer Energiespeichereinrichtung, einem Kühlkörper, wenigstens einem zwischen der Energiespeichereinrichtung und dem Kühlkörper angeordneten Peltier-Element und einer Steuereinrichtung bekannt.

Ausgehend von diesem Stand der Technik eignet sich für die Erfindung die Aufgabe, einen elektrischen Energiespeicher zu schaffen, der eine einfache und effiziente Abfuhr von im Betrieb des Energiespeichers generierter Verlustwärme ermöglicht.

Diese Aufgabe wird durch den elektrischen Energiespeicher gemäß Patentanspruch 1 gelöst. Weiterbildungen der Erfindung sind in den abhängigen Ansprüchen definiert.

Erfindungsgemäß wird ein Energiespeicher für ein Antriebssystem vorgeschlagen. Der Energiespeicher weist eine Energiespeichereinrichtung und einen Kühlkörper auf. Der Energiespeicher zeichnet sich durch wenigstens ein im Wärmefluss zwischen der Energiespeichereinrichtung und dem Kühlkörper angeordnetes Peltier-Element aus.

Bei dem erfindungsgemäßen Energiespeicher wirkt das Peltier-Element als erste Kühlstufe, und der Kühlkörper als zweite Kühlstufe. Eine solche Ausgestaltung ermöglicht eine effiziente (lokale) Kühlung der Energiespeichereinrichtung, welche des Weiteren auf relativ einfache Weise verwirklicht werden kann. Insbesondere kann auf den Einsatz eines aktiven Rückkühlers (Kältemaschine) verzichtet werden bzw. kann ein gegebenenfalls vorgesehener Rückkühler kleiner und leichter dimensioniert werden. Weitere Vorteile eines Peltier-Elements sind ein geringer Wartungsaufwand aufgrund des Fehlens beweglicher Teile, eine frei wählbare Einbaulage, und eine Unempfindlichkeit gegenüber mechanischen Einflüssen wie z.B. Schwingungen, Stößen und Erschütterungen.

Gemäß einer bevorzugten Ausführungsform weist der Energiespeicher weiter eine elektrisch isolierende Zwischenschicht auf, welche zwischen dem Peltier-Element und der Energiespeichereinrichtung angeordnet ist. Auf diese Weise kann eine zuverlässige elektrische Isolierung zwischen der Energiespeichereinrichtung und dem Peltier-Element verwirklicht werden. Um eine gute Wärmeleitung zwischen der Energiespeichereinrichtung und dem Peltier-Element zu erzielen, weist die Zwischenschicht vorzugsweise eine hohe thermische Leitfähigkeit auf.

Gemäß einer weiteren bevorzugten Ausführungsform weist die Zwischenschicht ein verformbares Material auf. Hierdurch ist es beispielsweise möglich, Bauteil-, Form- und/oder Lagetoleranzen von Komponenten des Energiespeichers auszugleichen.

Ein solches Ausgleichen kann beispielsweise dann in Betracht kommen, wenn der Energiespeicher gemäß einer weiteren bevorzugten Ausführungsform eine Anzahl an Energiespeichereinrichtungen und zugeordneten Peltier-Elementen aufweist. Die einzelnen Peltier-Elemente können hierbei zur gezielten (punktuellen) Kühlung der jeweiligen Energiespeichereinrichtungen verwendet werden.

Um eine gute Wärmeleitung zwischen dem Peltier-Element und dem Kühlkörper zu ermöglichen, ist das Peltier-Element gemäß einer weiteren bevorzugten Ausführungsform über eine Wärmeleitpaste mit dem Kühlkörper verbunden.

Gemäß einer alternativen bevorzugten Ausführungsform ist das Peltier-Element über eine Lot- oder eine Schweißverbindung mit dem Kühlkörper verbunden. Auch auf diese Weise kann eine gute Wärmeleitung zwischen dem Peltier-Element und dem Kühlkörper verwirklicht werden.

Gemäß einer weiteren bevorzugten Ausführungsform weist der Energiespeicher weiter ein Gehäuse auf, welches einen Innenraum umschließt. Die Energiespeichereinrichtung und das Peltier-Element sind in dem Innenraum angeordnet.

In dieser Hinsicht ist ferner vorzugsweise vorgesehen, dass der Kühlkörper ein Bestandteil des Gehäuses ist, wodurch sich eine (weitere) Massereduzierung des Energiespeichers erzielen lässt. In dieser Ausgestaltung kann der Kühlkörper insbesondere eine Gehäusewand des Energiespeichers bilden.

Gemäß einer weiteren bevorzugten Ausführungsform ist der Kühlkörper ein Flüssigkeitskühlkörper. Der Flüssigkeitskühlkörper ist von einem Kühlmedium wie z.B. Wasser durchströmbar. Hierbei ist der Einsatz des Peltier-Elements mit einer räumlichen Trennung zwischen der Energiespeichereinrichtung und dem Flüssigkeitskühlkörper verbunden, wodurch eine elektrische Isolation zwischen diesen Komponenten begünstigt wird.

In einer alternativen bevorzugten Ausführungsform ist vorgesehen, dass der Kühlkörper ein Luftkühlkörper ist. Dieser kann gegebenenfalls zusammen mit einem Ventilator verwendet werden.

Im Hinblick auf die Energiespeichereinrichtung des Energiespeichers kommen unterschiedliche Ausgestaltungen in Betracht. Beispielsweise kann die Energiespeichereinrichtung einen Doppelschichtkondensator umfassen. Möglich ist es auch, dass die Energiespeichereinrichtung eine aufladbare Batterie bzw. einen Akkumulator umfasst. Darüber hinaus kann es sich bei der Energiespeichereinrichtung auch um eine hybride Energiespeichereinrichtung handeln, welche einen Doppelschichtkondensator und eine aufladbare Batterie umfasst.

Erfindungsgemäß wird des Weiteren eine Kühlvorrichtung zur Kühlung einer Energiespeichereinrichtung eines Energiespeichers für ein Antriebssystem vorgeschlagen, welche einen Kühlkörper aufweist. Darüber hinaus weist die Kühlvorrichtung wenigstens ein Peltier-Element auf, welches eine als Wärmequelle wirkende erste Seite und eine als Wärmesenke wirkende zweite Seite aufweist. Hierbei ist die als Wärmequelle wirkende erste Seite mit dem Kühlkörper verbunden. Die zweite Seite ist vorgesehen, um thermisch an den Energiespeicher angekoppelt zu werden.

Die Kühlvorrichtung, bei welcher die als Wärmesenke wirkende zweite Seite des Peltier-Elements thermisch an die Energiespeichereinrichtung des Energiespeichers angebunden werden kann, ermöglicht eine effiziente (lokale) Kühlung der Energiespeichereinrichtung. Auch kann die Kühlvorrichtung mit einem einfachen Aufbau verwirklicht werden.

Neben dem Kühlkörper und dem bzw. den Peltier-Elementen kann die Kühlvorrichtung weitere Komponenten aufweisen. Bei einer möglichen Ausgestaltung des Kühlkörpers als Luftkühlkörper kommt z.B. die Verwendung eines Ventilators in Betracht. Bei einer alternativen Ausgestaltung des Kühlkörpers als Flüssigkeitskühlkörper kann z.B. eine zusätzliche Kältemaschine vorgesehen sein, mit deren Hilfe ein zum Durchströmen des Flüssigkeitskühlkörpers eingesetztes Kühlmedium auf aktive Weise rückgekühlt werden kann. Die Verwendung des bzw. der Peltier-Elemente bietet in dieser Ausgestaltung die Möglichkeit, für die Kältemaschine nur eine geringe Kühlleistung vorzusehen, so dass die Kältemaschine mit einem geringen Gewicht und kleinen Abmessungen verwirklicht werden kann.

Eine Weiterbildung des erfindungsgemäßen elektrischen Energiespeichers, der insbesondere zur Verwendung in einem Antriebssystem, z.B. für elektrisch betriebene Schienenfahrzeuge, dient, umfasst ein Energiespeichermodul mit einer oder mehreren Energiespeichereinrichtungen. Diese Energiespeichereinrichtungen können je nach Anwendungsfall Batterien bzw. Akkumulatoren oder auch Doppelschichtkondensatoren umfassen. Zur Kühlung des Energiespeichermoduls sind ferner eine oder mehrere Kühleinrichtungen vorgesehen, welche jeweils einen ersten, thermisch an das Energiespeichermodul angebundenen bzw. anbindbaren Kühlkörper aufweisen. Hier und im Folgenden ist unter einem Kühlkörper ein Bauteil mit einer hohen Wärmeleitfähigkeit zu verstehen, dessen Zweck die Aufnahme und Abfuhr von Wärme ist. Insbesondere handelt es sich bei Kühlkörpern um Bauteile aus einem Material mit einer Wärmeleitfähigkeit von 50 W/K·m (= Watt pro Kelvin und Meter) und größer, vorzugsweise von zumindest 100 W/K·m. Ein Kühlkörper besteht insbesondere aus festem Material, z.B. aus metallischem Material, wobei als Metalle vorzugsweise Kupfer und/oder Aluminium oder Legierungen dieser Metalle verwendet werden, welche eine sehr hohe Wärmeleitfähigkeit aufweisen. Ein Kühlkörper kann dabei als Flüssigkeitskühlkörper ausgestaltet sein, der zum Abtransport von Wärme mit Kühlmittel (wie z.B. Wasser) durchströmt wird, wozu in dem Körper entsprechende Kühlmittelkanäle vorgesehen sind. Gegebenenfalls kann ein Kühlkörper auch ein reiner Luftkühlkörper sein, dessen Kühlung durch die Umgebungsluft bzw. durch einen generierten Luftstrom bewirkt wird.

Der Energiespeicher zeichnet sich dadurch aus, dass eine jeweilige Kühleinrichtung neben dem ersten Kühlkörper ferner einen zweiten Kühlkörper und zumindest ein Peltier-Element umfasst, wobei das Peltier-Element eine erste, sich im Betrieb des Peltier-Elements abkühlende Seite und eine zweite, sich im Betrieb des Peltier-Elements erwärmende Seite aufweist. Dabei ist das zumindest eine Peltier-Element derart zwischen dem ersten Kühlkörper und dem zweiten Kühlkörper angeordnet, dass die erste Seite auf den ersten Kühlkörper zuweist und die zweite Seite auf den zweiten Kühlkörper zuweist.

In dem Energiespeicher erfolgt die Kühlung des oder der Energiespeichereinrichtungen nicht unmittelbar durch die PeltierElemente, sondern unter Zwischenschaltung eines ersten Kühlkörpers. Dies hat den Vorteil, dass die durch die erste Seite des Peltier-Elements erzeugte Kälteleistung nicht mehr punktuell, sondern über die Fläche des ersten Kühlkörpers abgegeben wird, so dass die Anordnung und Anzahl der Peltier-Elemente nicht auf die Anordnung und Anzahl der einzelnen Energiespeichereinrichtungen im Energiespeichermodul abgestimmt werden müssen. Insbesondere kann die Anzahl der Peltier-Elemente geringer als die Anzahl der Energiespeichereinrichtungen sein, z.B. kann die Anzahl der Peltier-Elemente 70% oder weniger der Anzahl der Energiespeichereinrichtungen betragen. Gegebenenfalls kann die Anzahl der Peltier-Elemente auch nur 50% oder weniger der Anzahl der Energiespeichereinrichtungen betragen. Ein weiterer Vorteil des erfindungsgemäßen Energiespeichers besteht darin, dass für bestimmte Anwendungsfälle, insbesondere bei geringer Umgebungstemperatur, eine ausreichende Kühlung des Energiespeichermoduls auch nur durch den ersten Kühlkörper ohne Betrieb der Peltier-Elemente erreicht werden kann.

In dem erfindungsgemäßen Energiespeichers ist eine Steuereinrichtung vorgesehen, welche das zumindest eine Peltier-Element abschaltet, wenn die Umgebungstemperatur einen vorgegebenen Temperaturwert unterschreitet bzw. kleiner oder gleich dem vorgegebenen Temperaturwert ist. Das Abschalten des zumindest einen Peltier-Elements erfolgt dabei durch eine Unterbrechung der Stromzufuhr zu dem Element. Dabei macht man sich die Tatsache zunutze, dass in dem erfindungsgemäßen Energiespeicher auch eine Abfuhr von Wärme ohne Betrieb der Peltier-Elemente erreicht werden kann. Bei niedrigeren Umgebungstemperaturen kann somit die Kühlung ohne Peltier-Elemente ausreichend sein, so dass die Elemente abgeschaltet werden können. Hierdurch wird eine besonders energieeffiziente Kühlung erreicht. Der vorgegebene Temperaturwert der Umgebungstemperatur, bei dessen Unterschreiten die Peltier-Elemente abgeschaltet werden, liegt in einer bevorzugten Variante bei in etwa 25 °C oder weniger.

In einer weiteren Ausführungsform des erfindungsgemäßen Energiespeichers ist zumindest eine Kühleinrichtung derart ausgestaltet, dass der erste Kühlkörper und/oder der zweite Kühlkörper ein Flüssigkeitskühlkörper ist, welcher im Betrieb in einem Kühlkreislauf von einem Kühlmittel, wie z.B. Wasser oder auch einer anderen Kühlflüssigkeit, durchströmt wird. Vorzugsweise ist dabei zumindest der zweite Kühlkörper als Flüssigkeitskühlkörper ausgestaltet. In einer besonders bevorzugten Variante ist sowohl der erste als auch der zweite Kühlkörper ein Flüssigkeitskühlkörper, welche zu einem gemeinsamen Kühlkreislauf gehören, d.h. welche in einem einzelnen Kühlkreislauf von Kühlmittel durchströmt werden. Vorzugsweise durchläuft der Kühlkreislauf ferner einen Rückkühler zur Kühlung von aus dem ersten oder zweiten Kühlkörper abfließendem Kühlmittel. Im Unterschied zu einer herkömmlichen Kühlung ohne Peltier-Elemente kann dabei der Rückkühler wesentlich kleiner dimensioniert werden. Insbesondere kann ein rein passiver Rückkühler eingesetzt werden, der eine Kühlung nur durch Umgebungsluft bzw. zirkulierende Umgebungsluft bewirkt. Gegebenenfalls kann auch ein aktiver Rückkühler in der Form einer Kältemaschine verwendet werden, wobei die Kühlleistung der Kältemaschine im Vergleich zu einer Kühlung ohne Peltier-Elemente wesentlich geringer sein kann, was zu einem kompakten Baumaß und einem geringen Gewicht der Kältemaschine führt.

In einer weiteren Ausgestaltung des erfindungsgemäßen Energiespeichers ist zumindest eine Kühleinrichtung derart ausgestaltet, dass der erste Kühlkörper mit dem Energiespeichermodul mechanisch verbunden ist, insbesondere über eine verformbare Zwischenschicht. Hierdurch wird eine direkte thermische Anbindung des ersten Kühlkörpers an das Energiespeichermodul erreicht. Die verformbare Zwischenschicht weist vorzugsweise eine hohe Wärmeleitfähigkeit auf, insbesondere kann es sich um ein sog. Gap-Pad aus nachgiebigem Kunststoff (z.B. Silikon) handeln. Die Wärmeleitfähigkeit eines solchen Gap-Pads liegt dabei im Bereich von 1 bis 3 W/K·m. Durch die Verformbarkeit des Gap-Pads können Oberflächenunebenheiten ausgeglichen werden, so dass ein vollflächiger Kontakt zwischen Energiespeichermodul und erstem Kühlkörper gewährleistet ist.

In einer weiteren Ausgestaltung des erfindungsgemäßen Energiespeichers ist zumindest eine Kühleinrichtung derart ausgestaltet, dass die erste Seite des zumindest einen Peltier-Elements mit dem ersten Kühlkörper und/oder die zweite Seite des zumindest einen Peltier-Elements mit dem zweiten Kühlkörper mechanisch verbunden ist, um hierdurch einen guten Übertrag von Kälteleistung bzw. Wärmeleistung vom Peltier-Element zum ersten Kühlkörper bzw. zweiten Kühlkörper zu erreichen. Vorzugsweise ist dabei die Zwischenschicht eine Schicht aus Material mit hoher Wärmeleitfähigkeit, insbesondere aus Lot und/oder aus Wärmeleitpaste und/oder aus verformbarem Material, wobei gegebenenfalls als verformbares Material das bereits oben erwähnte Gap-Pad verwendet werden kann.

In einer weiteren Ausführungsform des erfindungsgemäßen Energiespeichers kann zumindest eine Kühleinrichtung derart ausgestaltet sein, dass der erste und/oder zweite Kühlkörper ein Kühlkörper ohne Kühlmitteldurchfluss ist, insbesondere ein metallischer Kühlkörper, vorzugsweise aus Metall mit hoher Wärmeleitfähigkeit, wie z.B. Kupfer und/oder Aluminium und/oder einer Legierung aus Kupfer und/oder Aluminium. Hierdurch wird eine Kühleinrichtung mit einem besonders einfachen Aufbau geschaffen. Insbesondere ist dabei der erste Kühlkörper ein Kühlkörper ohne Kühlmitteldurchfluss, wohingegen für den zweiten Kühlkörper vorzugsweise ein Flüssigkeitskühlkörper verwendet wird.

Das oder die Kühleinrichtungen des Energiespeichers können zumindest teilweise direkter Bestandteil des Energiespeichermoduls sein, insbesondere können der erste und der zweite Kühlkörper sowie das zumindest eine Peltier-Element im Energiespeichermodul angeordnet sein bzw. Bestandteil des Gehäuses des Energiespeichermoduls sein. Gegebenenfalls besteht jedoch auch die Möglichkeit, dass zumindest eine Kühleinrichtung ein von dem Energiespeichermodul separiertes Modul ist. Dabei ist der erste Kühlkörper ein Flüssigkeitskühlkörper, der über einen mit Kühlmittel durchströmten Kühlkreislauf an das Energiespeichermodul (mittelbar) thermisch angebunden bzw. anbindbar ist.

In einer bevorzugten Variante umfasst dabei der Kühlkreislauf einen ersten Kühlkreislauf zur thermischen Anbindung des ersten Kühlkörpers an das Energiespeichermodul, wobei ferner ein mit Kühlmittel durchströmter zweiter Kühlkreislauf vorgesehen ist, der separat vom ersten Kühlkreislauf betreibbar ist. Der zweite Kühlkreislaüf umfasst dabei den zweiten Kühlkörper, der als Flüssigkeitskühlkörper ausgestaltet ist, sowie einen geeigneten Rückkühler. Auf diese Weise kann eine Kühlung in der Form eines Wärmetauschers auf der Basis von Peltier-Elementen erreicht werden. Vorzugsweise besteht dabei die Möglichkeit, dass der erste Kühlkreislauf und der zweite Kühlkreislauf derart verschaltbar sind, dass ein einzelner Kühlkreislauf geschaffen wird, dessen Kühlmittel unter Überbrückung des ersten und zweiten Kühlkörpers den Rückkühler und die Energiespeichereinrichtung durchläuft. Gemäß dieser Betriebsart wird dabei eine Kühlung rein durch den Rückkühler ohne Peltier-Elemente erreicht. Diese Betriebsart wird insbesondere dann gewählt, wenn die Umgebungstemperatur unter einem vorgegebenen Temperaturwert liegt bzw. kleiner oder gleich einem vorgegebenen Temperaturwert ist. Vorzugsweise kann diese Betriebsart dabei mit Hilfe der oben beschriebenen Steuereinrichtung eingestellt werden.

In einer weiteren Ausführungsform eines Energiespeichers mit einer als separiertes Modul ausgestalteten Kühleinrichtung ist lediglich ein einzelner Kühlkreislauf vorgesehen, welcher derart betreibbar ist, dass der Kühlkreislauf den ersten Kühlkörper, den zweiten, wiederum als Flüssigkeitskühlkörper ausgestalteten Kühlkörper, einen Rückkühler und das Energiespeichermodul durchläuft. Gegebenenfalls ist der einzelne Kühlkreislauf ferner in einem Betriebsmodus betreibbar, in dem der Kühlkreislauf den zweiten Kühlkörper, den Rückkühler und das Energiespeichermodul durchläuft und dabei den ersten Kühlkörper überbrückt. Dabei wird eine Kühlung ohne Peltier-Element bewirkt, so dass das zumindest eine Peltier-Element in diesem Betriebsmodus vorzugsweise abgeschaltet wird. Wiederum kann dieser Betriebsmodus dann eingestellt werden, wenn die Umgebungstemperatur unterhalb eines vorgegebenen Temperaturwerts liegt bzw. kleiner oder gleich dem vorgegebenen Temperaturwert ist. Die Einstellung dieses Betriebsmodus kann gegebenenfalls über die bereits oben beschriebene Steuereinrichtung erfolgen. In einer weiteren Ausgestaltung ist der Rückkühler Bestandteil des separierten Moduls. Vorzugsweise ist der Rückkühler dabei am zweiten Kühlkörper zu dessen Kühlung angeordnet. Hierdurch wird ein besonders kompakter Aufbau der Kühleinrichtung erreicht.

Wie bereits oben erwähnt, können die Energiespeichereinrichtungen des Energiespeichermoduls je nach Anwendungsfall unterschiedlich ausgestaltet sein. Insbesondere können die Energiespeichereinrichtungen einen oder mehrere Doppelschichtkondensatoren und/oder eine oder mehrere aufladbare Batterien umfassen.

Neben dem oben beschriebenen Energiespeicher umfasst die Erfindung ferner eine Kühleinrichtung zur Verwendung in einem solchen Energiespeicher. Die Kühleinrichtung umfasst dabei einen ersten, thermisch an den Energiespeicher bzw. dessen Energiespeichereinrichtung(en) anbindbaren Kühlkörper und einen zweiten Kühlkörper sowie zumindest ein Peltier-Element, welches eine erste, sich im Betrieb des Peltier-Elements abkühlende Seite und eine zweite, sich im Betrieb des Peltier-Elements erwärmende Seite aufweist. Das zumindest eine Peltier-Element ist dabei derart zwischen dem ersten Kühlkörper und dem zweiten Kühlkörper angeordnet, dass die erste Seite auf den ersten Kühlkörper zuweist und die zweite Seite auf den zweiten Kühlkörper zuweist.

Ausführungsbeispiele der Erfindung werden nachfolgend anhand der beigefügten Figuren detailliert beschrieben.

Es zeigen:
- FIG 1: eine schematische Darstellung eines Energiespeichers mit kühleinrichtung gemäß dem Stand der Technik;
- FIG 2: eine schematische Darstellung eines Energiespeichers mit Kühleinrichtung;
- FIG 3: eine schematische Darstellung eines Energiespeichers gemäß einer ersten Ausführungsform der Erfindung;
- FIG 4: eine Detaildarstellung eines Peltier-Elements des Energiespeichers der FIG 3;
- FIG 5: eine schematische Darstellung eines Energiespeichers gemäß einer zweiten Ausführungsform der Erfindung;
- FIG 6: eine schematische Darstellung eines Energiespeichers gemäß einer dritten Ausführungsform der Erfindung; und
- FIG 7: eine schematische Darstellung eines Energiespeichers gemäß einer vierten Ausführungsform der Erfindung.

Nachfolgend werden Energiespeicher mit Kühleinrichtung beschrieben, welche in einem Schienenfahrzeug, wie z.B. einer elektrisch betriebenen Straßenbahn, dazu genutzt werden, um den Elektromotor des Schienenfahrzeugs in einem Abschnitt ohne Überleitungen und damit ohne externer Strom- bzw. Spannungsversorgung mit elektrischer Energie zu versorgen bzw. gegebenenfalls auch die Bremsenergie des Schienenfahrzeugs durch Rekuperation rückzugewinnen. Die Erfindung ist jedoch nicht auf Energiespeicher für Schienenfahrzeuge beschränkt, sondern kann auch zur Energieversorgung anderer Fahrzeuge bzw. für nicht fahrzeugbezogene Anwendungsbereiche eingesetzt werden. Ein mögliches Beispiel ist ein elektrisch betriebener Bus bzw. ein Elektrobus. Des Weiteren kommen auch elektrische bzw. elektromotorische Antriebssysteme anderer Arbeitsgeräte oder Antriebssysteme in anderen Anwendungsbereichen in Betracht. Hierunter fallen z.B. Kräne oder Hebezeuge.

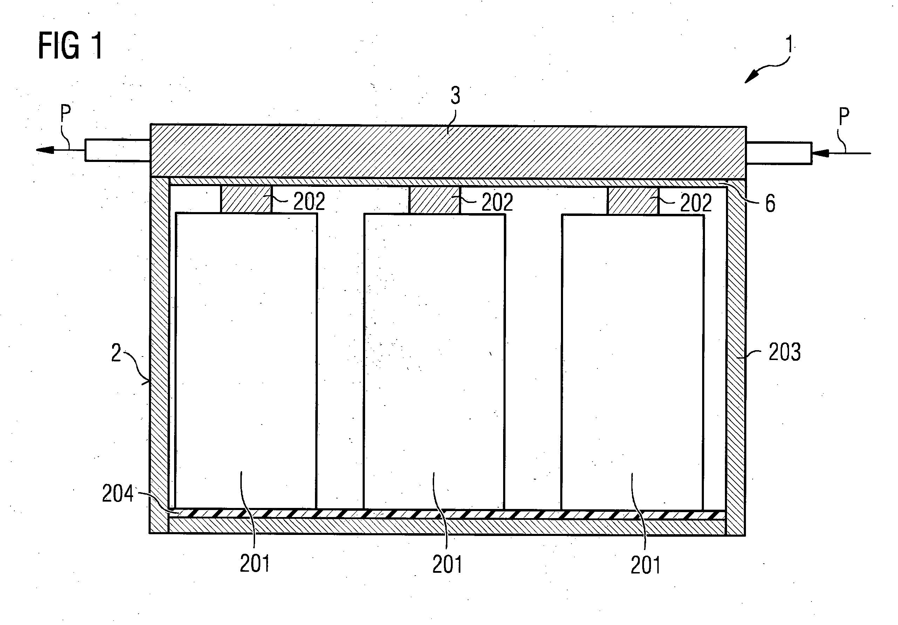

Um einen elektrischen Energiespeicher für ein Schienenfahrzeug verwenden zu können, welches unter hohen Umgebungstemperaturen (z.B. in tropischen Ländern) betrieben wird, ist es aus dem Stand der Technik bekannt, eine Kühlung des Energiespeichers über einen entsprechenden Kühlkörper vorzusehen. Hierdurch wird die Verlustwärme des Energiespeichers abgeführt und somit Beschädigungen des Energiespeichers durch überhitzung vermieden bzw. die Lebensdauer des Energiespeichers verlängert. FIG 1 zeigt eine Ausführungsform einer an sich bekannten Kühlung. Der schematisch im Schnitt dargestellte Energiespeicher 1 stellt eine Energiespeicheranordnung dar und umfasst ein Energiespeichermodul 2 mit einem rechteckförmigen Rahmen 203, in dem eine Vielzahl von Energiespeichereinrichtungen 201 in der Form entsprechender Speicherzellen vorgesehen ist. Die Speicherzellen sind über entsprechende Anschlüsse 202 miteinander in Reihe geschaltet und an einen Elektromotor eines Schienenfahrzeugs angeschlossen. Die einzelnen Speicherzellen können dabei als wieder aufladbare Batterien oder auch als Doppelschichtkondensatoren ausgestaltet sein. Innerhalb des Energiespeichermoduls 2 sind typischerweise eine größere Anzahl solcher Speicherzellen 201 (z.B. 48 Zellen) vorgesehen, wobei die einzelnen Zellen auf einer am Boden des Gehäuses 203 vorgesehenen elektrisch isolierenden Schicht 204 stehen.

Oberhalb der Anschlüsse 202 der einzelnen Speicherzellen 201 ist ein Flüssigkeitskühlkörper 3 vorgesehen, der im Betrieb durch ein geeignetes Kühlmittel, wie z.B. Wasser, durchströmt wird, wobei die Durchströmrichtung in FIG 1 durch die Pfeile P angedeutet ist. Der als Kühlplatte ausgebildete Kühlkörper 3 liegt dabei auf der Oberseite des Gehäuses 203 des Energiespeichermoduls 2 auf und kann als Bestandteil dieses Gehäuses betrachtet werden. Zur elektrischen Isolation der Unterseite des Kühlkörpers gegenüber den Anschlüssen 202 ist eine elektrisch isolierende Zwischenschicht 6 in der Form eines Gap-Pads aus Silikon vorgesehen. Dieses Gap-Pad weist eine gute Wärmeleitfähigkeit auf und gleicht aufgrund seiner Verformbarkeit auch Unebenheiten aus, so dass sichergestellt ist, dass der Kühlkörper 3 plan auf dem Gehäuse 203 und den einzelnen Anschlüssen 202 anliegt.

Der Flüssigkeitskühlkörper 3 ist Bestandteil eines nicht weiter im Detail gezeigten Kühlkreislaufs, wobei das aus dem Kühlkörper austretende Kühlmittel über eine nicht gezeigte Pumpe zu einem ebenfalls nicht gezeigten Rückkühler gefördert wird und von dort wieder zurück in den Kühlkörper 3 gelangt. Durch diesen Kühlkreislauf wird Wärme von dem Energiespeichermodul 2 zum Kühlkörper abgeführt und über das Kühlmittel zu dem Rückkühler transportiert, der das erwärmte Kühlmittel wieder abkühlt. In einer einfachen Realisierung ist der Rückkühler als passives Element ausgestaltet, das über keine aktiven Komponenten zur Erreichung einer Kühlwirkung verfügt. Beispielsweise kann der Rückkühler derart im Schienenfahrzeug angeordnet sein, dass er durch den Fahrtwind des Fahrzeugs gekühlt wird. Bei sehr hohen Umgebungstemperaturen reicht jedoch eine passive Rückkühlung nicht aus und es sind Kältemaschinen notwendig, welche jedoch bei dem dargestellten Energiespeicher eine Kälteleistung von in etwa 10 kW generieren müssten. Solche Kältemaschinen sind sperrig und sehr schwer.

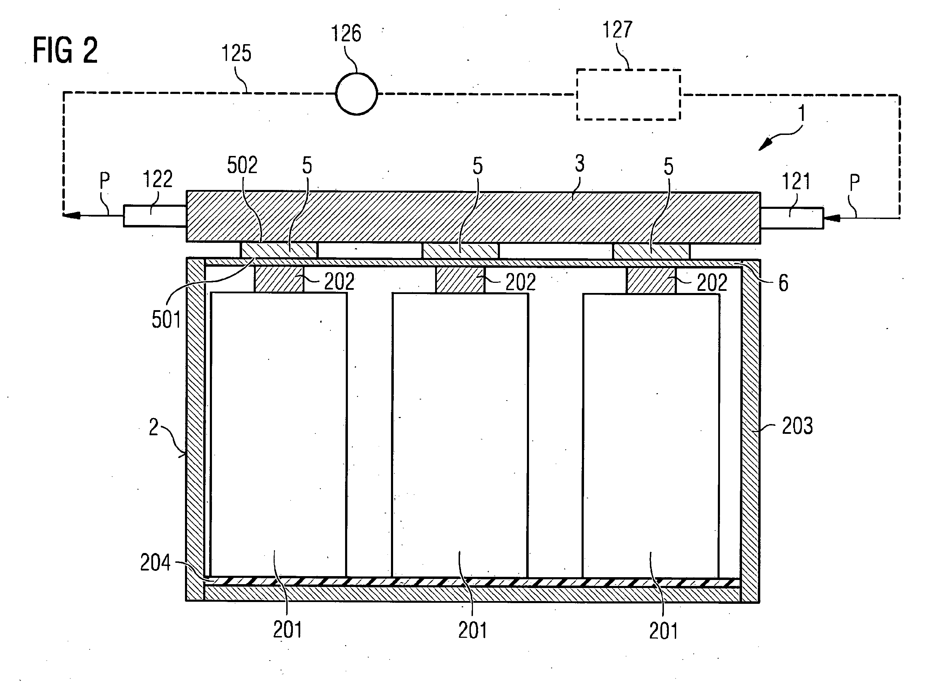

Um die Kühlung des Energiespeichermoduls der FIG 1 einfacher und effizienter zu gestalten, wird der in FIG 2 dargestellte Energiespeicher vorgeschlagen. In FIG 2 sowie auch in allen nachfolgenden Figuren werden die gleichen bzw. einander entsprechende Bauteile mit den gleichen Bezugszeichen bezeichnet. Diese Bauteile werden nur dann näher beschrieben, wenn sich ihre Funktionalität im Vergleich zu vorhergehenden Figuren verändert.

Der modulartig aufgebaute Energiespeicher 2 stellt ein Energiespeichermodul dar und weist wie in der Figur dargestellt drei Energiespeichereinrichtungen 201 auf. Jede der Energiespeichereinrichtungen 201 kann einen oder mehrere Doppelschichtkondensatoren (auch als "Supercap" bzw. "Supercapacitor" bezeichnet) umfassen, welche seriell und/oder parallel miteinander verschaltet sind (nicht dargestellt). Bei einer solchen Ausgestaltung des Energiespeichers 2 mit Doppelschichtköndensatoren wird die elektrische Energie auf elektrostatische Weise gespeichert. Hierbei kann der Energiespeicher 2 auch als "Doppelschichtkondensator-Modul" bezeichnet werden.

Die Energiespeichereinrichtungen 201 weisen ferner Kontakte bzw. Anschlüsse zur Kontaktierung derselben auf. In der Figur 2 sind entsprechende Anschlusselemente 202 an einer Seite der Energiespeichereinrichtungen 201 angedeutet. Weitere Anschlusselemente können auch an einer entgegen gesetzten Seite der Energiespeichereinrichtungen vorgesehen sein (nicht dargestellt). Über die Anschlüsse und weitere nicht dargestellte Einrichtungen, wie z.B. Verbindungsleitungen, können die Energiespeichereinrichtungen 201 mit der/den Antriebseinheit(en) des Fahrzeugs verbunden werden, und der/den Antriebseinheit(en) infolgedessen elektrische Energie zuführen. In umgekehrter Weise können die Energiespeichereinrichtungen 201 über die Anschlüsse (wieder) aufgeladen werden. Dies ist beispielsweise der Fall, wenn eine externe Strom- bzw. Spannungsversorgung zur Verfügung steht (z.B. Betrieb des Fahrzeugs mit Oberleitungen, Aufladen an einer stationären Ladestation, usw.) und/oder wenn z.B. eine Bremsenergie des Fahrzeugs rückgespeist wird.

Zur effektiven Kühlung der Energiespeichereinrichtungen 201 bzw. zum Abführen einer im Betrieb der Einrichtungen auftretenden Verlustwärme weist der Energiespeicher 2 ferner drei den jeweiligen Energiespeichereinrichtungen 201 zugeordnete Peltier-Elemente 5 und einen Flüssigkeitskühlkörper 3 auf. Der Flüssigkeitskühlkörper 3 weist einen Einlass 121 und einen Auslass 122 auf, um ein Kühlmittel bzw. eine Kühlflüssigkeit, wie z.B. Wasser, durch den Flüssigkeitskühlkörper 3 strömen zu lassen, wie in der Figur anhand von Pfeilen angedeutet ist. Der Flüssigkeitskühlkörper 3 ist z.B. in Form einer Kühlplatte ausgebildet, und weist z.B. ein metallisches Material auf. Auch kann der Flüssigkeitskühlkörper 3 zur Verbesserung der Kühlung z.B. mit Kühlrippen versehen sein.

Die Peltier-Elemente 5, welche in üblicher Weise aus unterschiedlich elektrisch leitfähigen Materialien bzw. unterschiedlich dotierten Halbleitermaterialien aufgebaut sein können, sind dazu ausgebildet, bei einem Stromdurchfluss eine Temperaturdifferenz zu erzeugen, so dass eine erste Seite 501 der Peltier-Elemente 5 als Wärmequelle und eine entgegen gesetzte zweite Seite 502 als Wärmesenke wirkt. Grundlage hierfür ist der sogenannte Peltier-Effekt. Zum Erzeugen des Stromflusses werden die Peltier-Kühler 5 mit Hilfe von Anschlussleitungen an entsprechende geregelte Strom- bzw. Spannungsversorgungen angeschlossen (nicht dargestellt).

Die Peltier-Elemente 5 sind derart in dem Energiespeicher 2 zwischen dem Flüssigkeitskühlkörper 3 und den Energiespeichereinrichtungen 201 angeordnet und werden im Kühlbetrieb derart mit einem elektrischen Strom beaufschlagt, dass die zweite Seite 502 (Wärmesenke) dem Flüssigkeitskühlkörper 3 gegenüberliegt bzw. thermisch an den Flüssigkeitskühlkörper 3 angebunden ist, wohingegen die erste Seite 501 (Wärmequelle) der jeweiligen Energiespeichereinrichtung 201 gegenüberliegt bzw. thermisch an die jeweilige Energiespeichereinrichtung 110 (bzw. deren Anschlusselement 111) angebunden ist. Auf diese Weise kann die Verlustwärme der Energiespeichereinrichtungen 201 an die Peltier-Elemente 5 übertragen werden. Die Peltier-Elemente 5 können diese Wärmeenergie sowie ihre eigene thermodynamisch resultierende Wärme weiter an den Flüssigkeitskühlkörper 3 und damit das den Flüssigkeitskühlkörper 3 durchströmende Kühlmittel abführen. Neben der Kühlung ist der Einsatz der Peltier-Elemente 5 bei dem Energiespeicher 2 auch mit einer raümlichen Trennung zwischen den Energiespeichereinrichtungen 201 und dem Flüssigkeitskühlkörper 3 verbunden. Dadurch kann eine elektrische Isolierung zwischen diesen Komponenten des Energiespeichers 2 begünstigt werden.

Um eine gute Wärmeleitung zwischen den Peltier-Elementen 5 und dem Flüssigkeitskühlkörper 3 zu erzielen, können die Peltier-Elemente 5 an der zweiten Seite 502 z.B. über eine Wärmeleitpaste (nicht dargestellt) mit dem Flüssigkeitskühlkörper 3 verbunden sein. Anstelle der Wärmeleitpaste kann auch ein anderes thermisch gut leitfähiges Material verwendet werden. In Betracht kommt z.B. ein metallisches Material oder ein Lotmaterial (nicht dargestellt). Bei Verwendung derartiger Materialen können die Peltier-Elemente 5 direkt an den Kühlkörper 3 geschweißt oder gelötet werden. In dieser Hinsicht können die Peltier-Elemente 5 vor dem Herstellen der zugehörigen Schweiß- oder Lotverbindung (zumindest in einem Teilbereich) eine metallisierte bzw. mit dem Lotmaterial versehene Oberfläche aufweisen.

Im Bereich der ersten Seite 501 ist hingegen zwischen den Peltier-Elementen 5 und den Energiespeichereinrichtungen 201 bzw. deren Anschlüssen 202 eine elektrisch isolierende Zwischenschicht 6 ("Gap-Pad") angeordnet, mit deren Hilfe eine zuverlässige elektrische Isolierung zwischen den Energiespeichereinrichtungen 201 und den Peltier-Elementen 5, und somit auch zwischen den Energiespeichereinrichtungen 201 und dem Flüssigkeitskühlkörper 3 verwirklicht werden kann. Die Zwischenschicht 6 weist eine hohe thermische Leitfähigkeit auf, um eine gute Wärmeleitung zwischen den Energiespeichereinrichtungen 201 und den zugehörigen Peltier-Elementen 5 zu erzielen. Darüber hinaus weist die Zwischenschicht 6 ein verformbares oder verpressbares weiches Material auf, wodurch die Möglichkeit gegeben ist, Bauteil-, Form- und/oder Lagetoleranzen von Komponenten des Energiespeichers 2 (insbesondere der Energiespeichereinrichtungen 201) auszügleichen, und eine zuverlässige thermische Anbindung zwischen den Energiespeichereinrichtungen 201 und den Peltier-Elementen 5 zu ermögliche. Im Hinblick auf diese Eigenschaften kommt für die Zwischenschicht 6 ein entsprechendes Kunststoff- bzw. "Gap-Pad"-Material in Betracht.

Neben diesen Komponenten weist der Energiespeicher 2 ferner ein rahmenförmiges Gehäuseteil, im Folgenden als Rahmen 203 bezeichnet auf. Zwischen dem Rahmen 203 und den Energiespeichereinrichtungen 201 kann zu Isolierungszwecken wie in der Figur dargestellt eine weitere elektrisch isolierende Schicht 204 vorgesehen sein. Der Rahmen 203 kann ferner wie in der Figur angedeutet an den Flüssigkeitskühlkörper 3 angrenzen und mit diesem (z.B. mit Hilfe von Schrauben) verbunden sein. Auf diese Weise kann der Rahmen 203 zusammen mit dem Flüssigkeitskühlkörper 3 ein einen Innenraum umschließendes Gehäuse bilden, innerhalb dessen die Energiespeichereinrichtungen 201 und die Peltier-Elemente 5 angeordnet sind. Eine solche Ausgestaltung, in welcher der Flüssigkeitskühlkörper 3 als Gehäusewand des Energiespeichers 2 dienen kann, bietet die Möglichkeit, den Energiespeicher 2 mit kleineren Abmessungen bzw. einem geringeren Gewicht zu verwirklichen.

Im Betrieb des Energiespeichers 2 wird zum Kühlen der Energiespeichereinrichtungen 201 ein Kühlmittelstrom (z.B. Wasser) durch den Flüssigkeitskühlkörper 3 erzeugt. Zu diesem Zweck ist der Flüssigkeitskühlkörper 3 des Energiespeichers 2 mit weiteren Einrichtungen bzw. Komponenten einer Kühlvorrichtung bzw. eines Kühlsystems verbunden, so dass wie in der Figur dargestellt ein geschlossener Kühlmittelkreislauf gebildet werden kann. Hierunter fallen Rohr- bzw. Kühlmittelleitungen 125, welche an dem Einlass 121 und dem Auslass 122 angeschlossen sind, eine Pumpe 126, mit deren Hilfe das Kühlmittel in Umlauf versetzt werden kann, und eine zum Kühlen bzw. Rückkühlen des Kühlmittels vorgesehen Rückkühleinheit 127.

Gleichzeitig wird ein elektrischer Stromfluss durch die in dem Energiespeicher 2 integrierten Peltier-Elemente 5 erzeugt, wodurch die Peltier-Elemente 5 wie oben beschrieben als lokale "Wärmepumpen" wirken und die Abwärme bzw. Verlustwärme der Energiespeichereinrichtungen 201 an den Flüssigkeitskühlkörper 3 und das darin geführte Kühlmittel übertragen. Das hierbei erwärmte Kühlmittel verlässt den Flüssigkeitskühlkörper 3 über den Auslass 122, und kann nach einer entsprechenden Rückkühlung (z.B. an die Umgebung) wieder über den Einlass 121 in den Flüssigkeitskühlkörper 120 zurückgeführt werden. Der zur Kühlung der Energiespeichereinrichtungen 201 aufgewendete elektrische Leistungsbedarf ist abhängig von dem jeweiligen Betriebsfall, und kann beispielsweise im kW-Bereich liegen.

Bei der Kühlung des Energiespeichers 2 wirken die integrierten Peltier-Elemente 5 als erste Kühlstufe und der Flüssigkeitskühlkörper 3 mit dem darin geführten Kühlmittel als zweite Kühlstufe. Durch die punktuell bzw. lokal kühlenden Peltier-Elemente 5 können die zugehörigen Energiespeichereinrichtungen 201 auf eine Temperatur abgekühlt werden, welche unter der Temperatur des Kühlmittels in dem Flüssigkeitskühlkörper 3 liegt. Auf diese Weise wird eine effektive Kühlung der Energiespeichereinrichtungen 201 ermöglicht. Dies gilt insbesondere auch für heiße geographische Gegenden mit relativ hohen Umgebungstemperaturen. Weitere Vorteile der Peltier-Elemente 5 sind ein geringer Wartungsaufwand aufgrund des Fehlens beweglicher Teile, eine frei wählbare Einbaulage, und eine Unempfindlichkeit gegenüber mechanischen Einflüssen wie z.B. Schwingungen, Stößen und Erschütterungen.

Die in der Figur 2 dargestellte Rückkühleinheit 127 kann relativ einfach aufbaut bzw. für eine passive Betriebsweise ausgebildet sein, und beispielsweise lediglich einen Flüssigkeits-Luft-Wärmetauscher umfassen. Optional kann die Rückkühleinheit 127 auch zusätzlich eine Kältemaschine mit einem Kompressor zur aktiven Rückkühlung des Kühlmittels enthalten. Aufgrund der durch die Peltier-Elemente 5 ermöglichten effektiven Kühlung kann für eine solche Kältemaschine lediglich eine kleine Kühlleistung vorgesehen sein, d.h. dass die Kältemaschine relativ klein und leicht dimensioniert werden kann. Möglich ist es auch, auf den Einsatz einer solchen Kältemaschine vollständig zu verzichten, und stattdessen eine passive Rückkühleinheit zu verwenden.

Zwar besteht die Möglichkeit, dass die mit den Peltier-Elementen 5 ermöglichte Kühlleistung bzw. deren Wirkungsgrad gegebenenfalls unter dem Wirkungsgrad einer "großen" Kältemaschine mit einer hohen Kühlleistung liegt. Dem stehen jedoch die oben genannten Vorteile der Peltier-Elemente 5 gegenüber. Auch kann der Einsatz der Peltier-Elemente 5 mit einem geringeren Kostenaufwand verbunden sein. Durch diese Eigenschaften wird eine gegebenenfalls geringere Kühlleistung (deutlich) überkompensiert.

Der anhand der Figur 2 beschriebene elektrische Energiespeicher bzw. die zugehörige Kühlvorrichtung stellen bevorzugte bzw. beispielhafte Ausführungsformen der Erfindung dar. Darüber hinaus sind weitere Ausführungsformen vorstellbar, welche weitere Abwandlungen bzw. Kombinationen von beschriebenen Merkmalen umfassen können. Auch sind angegebene Materialien als Beispiele anzusehen, welche gegebenenfalls durch andere Materialien ersetzt werden können.

Im Hinblick auf den Energiespeicher besteht beispielsweise die Möglichkeit, diesen mit einer anderen Anzahl an Energiespeichereinrichtungen 201 auszubilden. Anstelle von Doppelschichtkondensatoren können zu kühlende Energiespeichereinrichtungen 201 auch aus einer oder mehreren elektrisch aufladbaren Batterien bzw. Akkumulatoren aufgebaut sein, welche seriell und/oder parallel miteinander verschaltet sind. Bei einer solchen Ausgestaltung des Energiespeichers 201 mit Batterien kann die elektrische Energie auf elektrochemische Weise gespeichert werden. Darüber hinaus kann es sich bei einer Energiespeichereinrichtung 201 auch um eine hybride Energiespeichereinrichtung ("Hybrid Cap") handeln, welche sowohl einen oder mehrere Doppelschichtkondensatoren und auch eine oder mehrere aufladbare Batterien umfasst.

Des Weiteren besteht die Möglichkeit, einen Energiespeicher abweichend von dem Energiespeicher 2 mit einem anderen Aufbau und/oder anderen bzw. weiteren als den beschriebenen Komponenten zu verwirklichen. Beispielsweise kann die in der Figur gezeigte Anordnung aus dem Flüssigkeitskühlkörper 3 und den Peltier-Elementen 5, welche im Bereich einer Stirnseite der Energiespeichereinrichtungen 201 vorgesehen ist, an einer anderen Stelle innerhalb eines Energiespeichers angeordnet werden.

Auch ist es möglich, dass einer zu kühlenden Energiespeichereinrichtung 201 mehrere Peltier-Elemente 5 zugeordnet sind. Diese können nebeneinander in einem Bereich zwischen einem Kühlkörper 3 und der betreffenden Energiespeichereinrichtung 201 angeordnet sein.

Eine weitere mögliche Abwandlung ist ein Energiespeicher, bei dem zur Kühlung mehrere (z.B. zwei) Flüssigkeitskühlkörper zum Einsatz kommen, wobei zwischen den Flüssigkeitskühlkörpern und den Energiespeichereinrichtungen jeweils Peltier-Elemente (sowie eine isolierende Zwischenschicht) vorgesehen sind. Die Flüssigkeitskühlkörper können hierbei erneut als Gehäuseteile bzw. Gehäusewände des betreffenden Energiespeichers dienen. Denkbar ist auch ein Energiespeicher mit einem oder mehreren Flüssigkeitskühlkörpern, welche nicht als Gehäusekomponenten bzw. -wände des betreffenden Energiespeichers dienen, und stattdessen innerhalb eines separaten Gehäuses angeordnet sind.

Abwandlungen sind auch für eine Kühlvorrichtung zur Kühlung von Energiespeichereinrichtungen eines Energiespeichers vorstellbar. Insbesondere besteht die Möglichkeit, anstelle eines Flüssigkeitskühlkörpers 3 einen Luftkühlkörper zu verwenden. Im Hinblick auf den in der Figur 2 dargestellten Energiespeicher 2 besteht daher die Möglichkeit, den Flüssigkeitskühlkörper 3 durch einen Luftkühlkörper zu ersetzen. Ein solcher Luftkühlkörper, welcher ebenfalls ein metallisches Material aufweisen kann, kann beispielsweise in Form einer Luftkühlplatte ausgebildet sein. Auch kann der Luftkühlkörper zur Verbesserung der Kühlung z.B. mit Kühlrippen versehen sein. Des Weiteren kann der Luftkühlkörper gegebenenfalls in Kombination mit einem Ventilator verwendet werden.

Die obigen Ausführungen zu einem Flüssigkeitskühlkörper 120 sind in entsprechender Weise auch auf einen solchen Luftkühlkörper anwendbar. So kann ein Luftkühlkörper beispielsweise ebenfalls Bestandteil eines Gehäuses eines Energiespeicher sein bzw. eine Gehäusewand eines Energiespeichers bilden, oder können beispielsweise mehrere Luftkühlkörper zur Kühlung eines Energiespeichers vorgesehen sein, wobei zwischen den Luftkühlkörpern und den Energiespeichereinrichtungen jeweils Peltier-Elemente vorgesehen sind. Auch hierbei können Peltier-Elemente z.B. über eine Wärmeleitpaste oder eine Lot- bzw. Schweißverbindung mit einem Luftkühlkörper verbunden sein.

Ferner ist es vorstellbar, eine Kühlvorrichtung bzw. Komponenten einer Kühlvorrichtung auf andere Weise an einem Energiespeicher zu verwenden bzw. in einem Energiespeicher zu integrieren als bei dem in der Figur gezeigten Energiespeicher 2, bei welchem (lediglich) der Kühlkörper 3 und die Peltier-Elemente 3 Bestandteile des Energiespeichers 2 sind, wohingegen die Rohrleitung 125, die Pumpe 126 und der (gegebenenfalls) vorgesehene Rückkühler 127 externe Einrichtungen darstellen. Beispielsweise ist es möglich, den Energiespeicher 100 so abzuwandeln, dass auch die Pumpe 126 und der Rückkühler 127 integrale Komponenten des betreffenden Energiespeichers sind bzw. in einem gemeinsamen Gehäuse mit anderen Komponenten angeordnet werden. Im Hinblick auf eine Luftkühlung kann ein gegebenenfalls vorgesehener Ventilator ebenfalls integraler Bestandteil eines Energiespeichers sein.

In gleicher Weise besteht beispielsweise die Möglichkeit, eine Kühlvorrichtung (wenigstens) umfassend einen Kühlkörper (Flüssigkeits- oder Luftkühlkörper) und (wenigstens) ein Peltier-Element getrennt von einem Energiespeicher zu verwirklichen, und mit diesem in geeigneter Weise z.B. im Rahmen der Montage an einem Fahrzeug zu verbinden, wobei das bzw. die Peltier-Element(e) zwischen einer Energiespeichereinrichtung des Energiespeichers und dem Kühlkörper angeordnet wird/werden.

Darüber hinaus wird darauf hingewiesen, dass der beschriebene Energiespeicher 2 sowie Abwandlungen desselben nicht nur auf den Einsatz bei Schienenfahrzeugen wie z.B. Straßenbahnen beschränkt ist, sondern auch zur Energieversorgung anderer Fahrzeuge herangezogen werden kann. Ein mögliches Beispiel ist ein elektrisch betriebener Bus bzw. ein Elektrobus. Des Weiteren kommen auch elektrische bzw. elektromotorische Antriebssysteme anderer Arbeitsgeräte oder Antriebssysteme in anderen Anwendungsbereichen in Betracht. Hierunter fallen z.B. Kräne oder Hebezeuge.

Das in FIG 2 gezeigte Energiespeichermodul 2 weist den gleichen Aufbau wie das Modul der FIG 1 auf, d.h. das Modul verfügt über ein Gehäuse 203 mit darin angeordneten Speicherzellen 201 mit entsprechenden Anschlüssen 202. In Analogie zu FIG 1 ist ferner wiederum ein Gap-Pad 6 vorgesehen, wobei nunmehr oberhalb des Gap-Pads nicht mehr unmittelbar ein entsprechender Kühlkörper 3 vorgesehen ist. Vielmehr liegt auf dem Gap-Pad eine Vielzahl von Peltier-Elementen 5, wobei für jede Speicherzelle 201 ein separates Peltier-Element zur Kühlung vorgesehen ist. Die Peltier-Elemente werden mit Gleichstrom versorgt und kühlen sich dabei in an sich bekannter Weise auf einer ersten Seite ab, wohingegen sie sich auf der gegenüberliegenden, zweiten Seite erwärmen. In FIG 1 ist die untere Seite der einzelnen Peltier-Elemente 5 die erste, sich abkühlende Seite, wohingegen die Oberseite der einzelnen Peltier-Elemente die zweite, sich erwärmende Seite ist. Für eines der Peltier-Elemente ist die Unterseite mit Bezugszeichen 501 und die Oberseite mit Bezugszeichen 502 bezeichnet.

Durch die kühlende Seite des jeweiligen Peltier-Elements wird lokal eine Kühlung der unter dem Peltier-Element befindlichen Speicherzelle bewirkt, wobei die im Betrieb des Peltier-Elements abgegebene Wärme auf der zweiten Seite des Elements über einen Flüssigkeitskühlkörper 3 abgeführt wird, der analog zu der Kühlplatte 3 der FIG 1 aufgebaut ist. Das heißt, das im Kühlkörper strömende Kühlmittel fließt wiederum in die durch die Pfeile P angedeutete Richtung in einem geschlossenen Kühlkreislauf mit Pumpe und Rückkühler. Die Peltier-Elemente 5 fungieren dabei als erste Kühlstufe, wohingegen der Kühlkörper 3 eine zweite Kühlstufe darstellt. Dies hat zur Folge, dass auf den Einsatz eines aktiven Rückkühlers in der Form einer Kältemaschine verzichtet werden kann bzw. ein aktiver Rückkühler kleiner und leichter dimensioniert werden kann. Ein Nachteil der in FIG 2 gezeigten Kühlung über Peltier-Elemente besteht darin, dass zur effizienten Kühlung ein Peltier-Element für jede Speicherzelle 201 vorgesehen werden sollte. Ferner müssen die Peltier-Elemente auch bei niedrigen Umgebungstemperaturen in Betrieb bleiben, da die Elemente eine schlechte Wärmeleitfähigkeit aufweisen, so dass die in den Speicherzellen erzeugte Verlustwärme ohne Betrieb der Peltier-Elemente nicht mehr geeignet abgeführt werden kann.

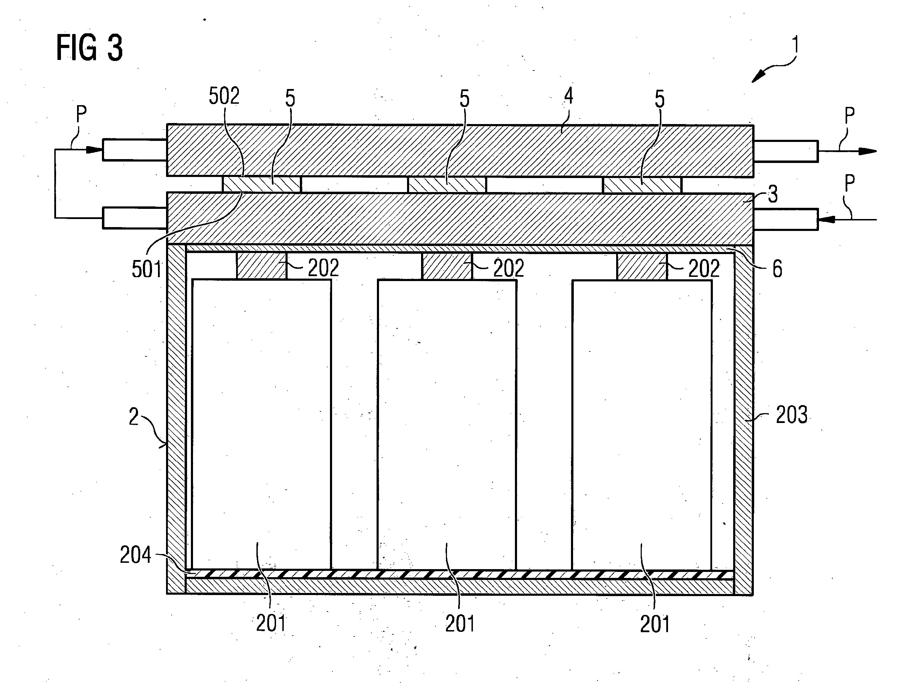

FIG 3 zeigt eine schematische Darstellung einer ersten Ausführungsform der Erfindung, welche die oben beschriebenen Nachteile behebt. Der Aufbau des dargestellten Energiespeichermoduls 2 entspricht den Energiespeichermodulen der FIG 1 und FIG 2. Im Unterschied zu dem Energiespeicher der FIG 2 schließen sich nunmehr an das auf der Oberseite des Energiespeichermoduls 2 vorgesehene Gap-Pad 6 nicht mehr direkt Peltier-Elemente 5 an, sondern es ist zunächst ein erster Flüssigkeitskühlkörper 3 in der Form einer Kühlplatte vorgesehen, dessen Unterseite auf dem Gap-Pad aufliegt. Auf der Oberseite des Kühlkörpers 3 befinden sich wiederum Peltier-Elemente 5, wobei die kühlende erste Seite 501 der einzelnen Peltier-Elemente auf die Oberseite des Kühlkörpers 3 zuweist und die gegenüberliegende, sich erwärmende zweite Seite 502 der Peltier-Elemente auf die Unterseite eines weiteren, zweiten Flüssigkeitskühlkörpers 4 in der Form einer Kühlplatte zuweist. Das heißt, die Peltier-Elemente 5 sind zwischen den beiden Kühlkörpern 3 und 4 angeordnet.

Die Kühlkörper 3 und 4 sind Bestandteil eines gemeinsamen Kühlkreislaufs, wobei die Strömrichtung des Kühlmittels wiederum durch Pfeile P angedeutet ist. In dem Kühlkreislauf ist dabei analog zu den Energiespeichern der FIG 1 und FIG 2 eine entsprechende Pumpe zur Förderung des Kühlmittels sowie ein geeigneter Rückkühler vorgesehen. Diese Komponenten können beispielsweise auf der rechten Seite der Kühlkörper 3 und 4 zwischen dem Ausgang des Kühlkörpers 4 und dem Eingang des Kühlkörpers 3 angeordnet sein.

Der Kühlkörper 3, der über das Gap-Pad 6 thermisch an das Energiespeichermodul 2 angebunden ist, nimmt die Verlustwärme der einzelnen Speicherzellen auf. Dabei erfolgt unmittelbar von der Oberseite des Kühlkörpers 3 eine Kühlung über die sich abkühlenden Seiten 501 der *eltier-Elemente 5. Die beim Betrieb der Elemente entstehende Wärme auf der zweiten Seite 502 wird durch den oberen Kühlkörper 4 aufgenommen und durch den Kühlkreislauf über den vorgesehenen Rückkühler abgeführt. Durch die Verwendung der Peltier-Elemente wird somit die Temperatur des gesamten Kühlkörpers 3 und damit auch der einzelnen Speicherzellen 201 abgesenkt. Das aus dem Kühlkörper 3 abfließende Kühlmittel fließt durch den zweiten Kühlkörper 4, der letztendlich die gesamte, in der Anordnung der FIG 3 erzeugte Wärme samt der Abwärme der Peltier-Elemente 5 aufnimmt.

Im Unterschied zur Ausführungsform der FIG 2 wird in dem Energiespeicher der FIG 3 nicht nur die zweite Wärme abführende Seite der Peltier-Elemente mit einem Kühlsystem verbunden, sondern auch die erste, Wärme aufnehmende Seite. Auf diese Weise kühlt der gesamte untere Kühlkörper 3 ab, und es ist insbesondere nicht mehr erforderlich, die Peltier-Elemente derart anzuordnen, dass oberhalb jeder Speicherzelle 201 ein separates Peltier-Element vorgesehen ist. Das heißt, das Anordnungsraster der Peltier-Elemente sowie die Anzahl der Peltier-Elemente können von dem Raster und der Anzahl der Speicherzellen abweichen. Damit kann die Anzahl der Peltier-Elemente ganz auf die Leistungsbilanz der als Wärmequellen fungierenden Speicherzellen abgestimmt werden. Insbesondere kommt der Energiespeicher mit einer deutlich geringeren Anzahl an Peltier-Elementen aus, als dies in dem Energiespeicher der FIG 2 der Fall ist. Ein weiterer Vorteil des Energiespeichers der FIG 3 besteht darin, dass über eine geeignete Ansteuerung die Peltier-Elemente nur dann in Betrieb genommen werden können, wenn die Umgebungstemperatur einen vorbestimmten Schwellwert überschreitet. Ist dies nicht der Fall, können die Peltier-Elemente unbestromt bleiben und die Kühlung kann allein basierend auf dem Kühlkreislauf aus Kühlkörper 3 und 4 sowie entsprechendem Rückkühler und Pumpe bewirkt werden. Im Unterschied zum Energiespeicher der FIG 2 ist dabei eine gute Wärmeanbindung an das Energiespeichermodul 2 durch den Kühlkörper 3 gegeben. Somit können in der Ausführungsform der FIG 3 die Peltier-Elemente bei kühleren Umgebungsbedingungen abgeschaltet bleiben, so dass der Gesamtleistungsbedarf der Kühlung geringer ausfällt.

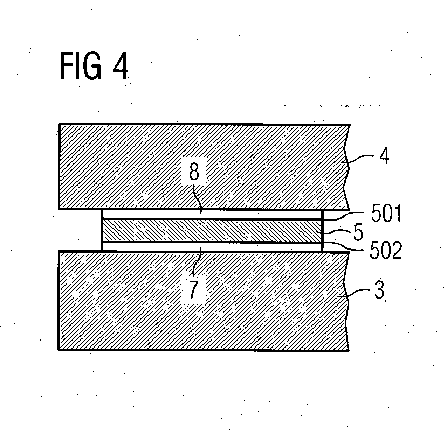

FIG 4 zeigt eine Detailansicht eines der Peltier-Elemente der FIG 3. Man erkennt aus FIG 4 insbesondere, dass zwischen der Unterseite 501 des Peltier-Elements 5 und der Oberseite des Kühlkörpers 3 eine Zwischenschicht 7 vorgesehen ist. Ebenso ist zwischen der Oberseite 502 des Peltier-Elements 5 und der Unterseite des Kühlkörpers 4 eine Zwischenschicht 8 angeordnet. Die beiden Zwischenschichten bestehen dabei aus Material mit hoher Wärmeleitfähigkeit, beispielsweise aus einer Wärmeleitpaste bzw. Lot. Um Unebenheiten auf der Oberfläche der Kühlkörper bzw. des Peltier-Elements auszugleichen, können die Zwischenschichten gegebenenfalls auch aus verformbarem Material, beispielsweise aus dem bereits oben erwähnten Gap-Pad, bestehen. Vorzugsweise ist das Gap-Pad dabei zwischen der Unterseite 201 des Peltier-Elements 5 und der Oberseite des Kühlkörpers 3 vorgesehen.

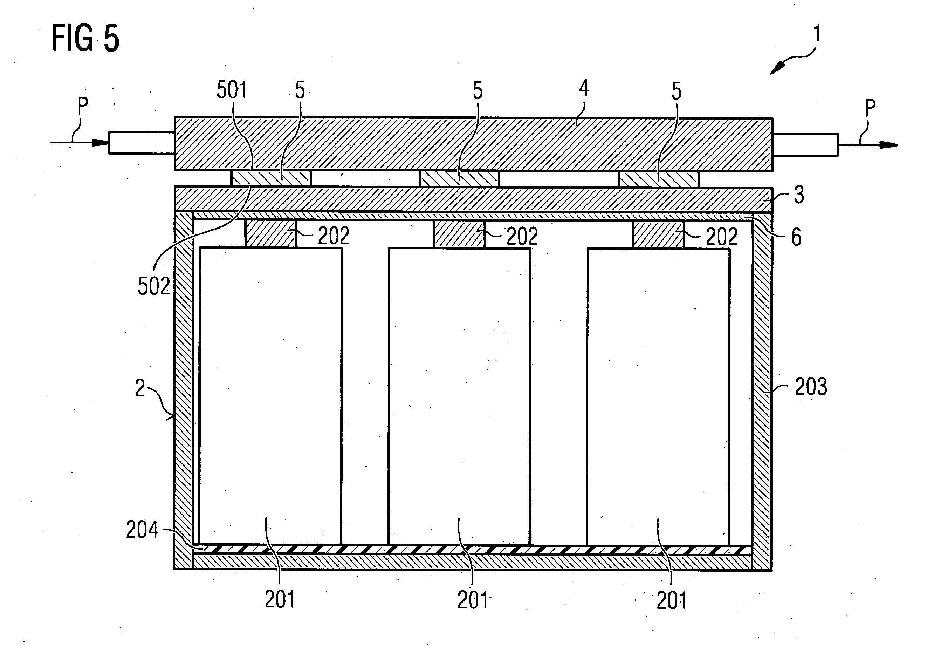

Nachfolgend werden weitere Ausführungsformen eines erfindungsgemäßen Energiespeichers anhand von FIG 5 bis FIG 7 beschrieben. Diese Ausführungsbeispiele weisen dabei im Wesentlichen die gleichen Vorteile wie die Ausführungsform der FIG 3 auf. In dem Energiespeicher der FIG 5 wird anstatt eines Kühlkörpers 3 in der Form eines Flüssigkeitskühlkörpers ein Kühlkörper in der Form einer metallischen Platte mit hoher Leitfähigkeit, insbesondere aus Kupfer oder Aluminium, eingesetzt. Die Dicke der Platte ist dabei derart ausgelegt, dass die Temperaturgradienten quer zur Platte gering sind. Der in der Ausführungsform der FIG 5 ausgebildete Kühlkreislauf ist wiederum durch entsprechende Pfeile P angedeutet und läuft nunmehr über den oberen Kühlkörper 4 hin zu einem (nicht gezeigten) Rückkühler, wobei die Förderung des Kühlmittels auch über eine entsprechende Pumpe im Kühlkreislauf bewirkt wird.

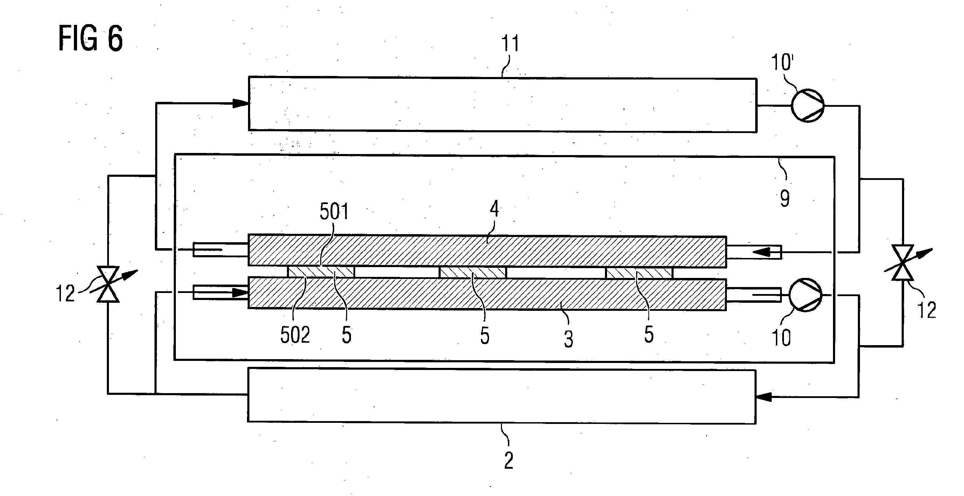

FIG 6 zeigt eine weitere Ausführungsform eines erfindungsgemäßen Energiespeichers. Im Unterschied zu den vorhergehenden Ausführungsformen ist die Kühleinrichtung nunmehr nicht mehr mechanisch mit dem Energiespeichermodul verbunden, sondern bildet eine separate Einheit bzw. ein separates Modul, welches mit Bezugszeichen 9 bezeichnet ist. Das Energiespeichermodul ist in der Ausführungsform der FIG 6 nur noch schematisch durch eine Box mit Bezugszeichen 2 angedeutet. Die thermische Anbindung des in der Kühleinrichtung vorgesehenen ersten Kühlkörpers 3 an das Energiespeichermodul 2 erfolgt nunmehr über das Kühlmittel eines entsprechenden Kühlkreislaufs, der durch den ersten Kühlkörper 3, eine Pumpe 10 und das Energiespeichermodul 2 gebildet wird. In Analogie zu den Ausführungsformen der FIG 3 bis FIG 5 ist in FIG 6 wiederum eine Mehrzahl von Peltier-Elementen 5 zwischen dem ersten Kühlkörper 3 und einem weiteren, zweiten Kühlkörper 4 angeordnet, wobei die kalte Seite 501 der Peltier-Elemente auf den Kühlkörper 3 zuweist und die warme Seite 502 der Peltier-Elemente auf den Kühlkörper 4 zuweist. Der Kühlkörper 4 ist dabei Bestandteil eines weiteren Kühlkreislaufs, der ferner eine Pumpe 10' sowie einen geeigneten Rückkühler 11 umfasst.

Gemäß der Anordnung der FIG 6 wird ein Wärmetauscher unter Verwendung entsprechender Peltier-Elemente realisiert. Dieser Wärmetauscher kann separat von dem Energiespeichermodul ausgebildet sein und ist thermisch über den Fluss des Kühlmittels an das Energiespeichermodul angebunden. In der Ausführungsform der FIG 6 ist ferner ein Bypass basierend auf zwei Ventilen 12 auf der linken und rechten Seite der Kühlkreisläufe vorgesehen. In geschlossener Stellung der Ventile 12 wird dabei eine Kühlung des Energiespeichermoduls 2 über die beiden beschriebenen Kühlkreisläufe mit bestromten Peltier-Elementen durchgeführt. Durch den Bypass kann auch eine Kühlung ohne Peltier-Elemente erreicht werden. In diesem Fall werden die Ventile 12 geöffnet, so dass nur noch ein einziger Kühlkreislauf unter Überbrückung der beiden Kühlkörper 3 und 4 und der Peltier-Elemente 5 geschaffen wird. Dieser Kühlkreislauf umfasst dann nur noch das Energiespeichermodul 2 und den Rückkühler 11 sowie die Pumpe 10'. Diese Betriebsart wird analog zu den obigen Ausführungsformen immer dann aktiviert, wenn die Umgebungstemperatur unterhalb eines vorbestimmten Werts liegt, so dass die Kühlung des Energiespeichermoduls 2 rein durch den Rückkühler 11 ausreichend ist.

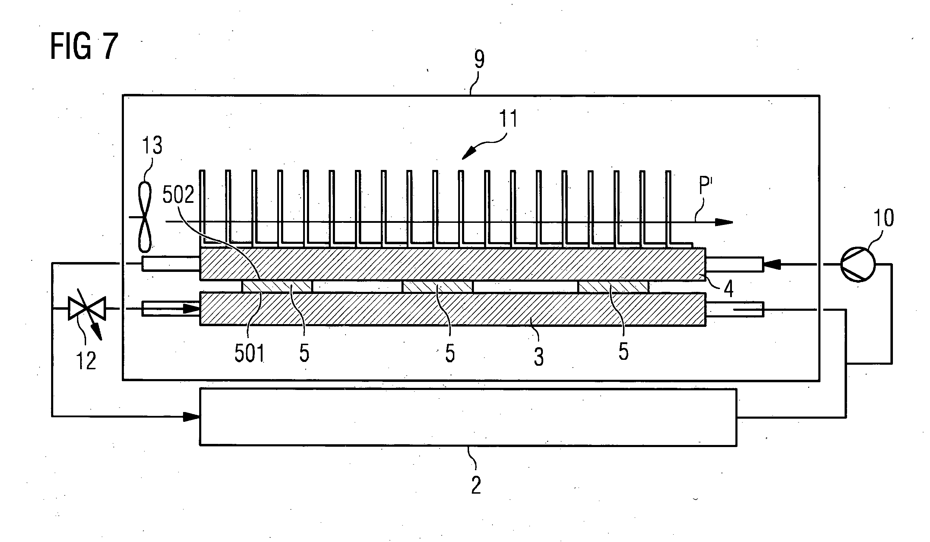

FIG 7 zeigt eine weitere Abwandlung der Ausführungsform des Energiespeichers der FIG 6. Dabei ist die Kühleinrichtung wiederum als separates Modul 9 ausgebildet, wobei nunmehr der Rückkühler 11 integraler Bestandteil des Moduls 9 ist. Der Rückkühler ist dabei als passiver Luft-Rückkühler durch entsprechende Lamellen angedeutet, wobei die Kühlwirkung in der Ausführungsform der FIG 7 durch einen entsprechenden Ventilator 13 unerstützt wird. Der Fluss der Kühlluft ist dabei mit dem Pfeil P' angedeutet.

Das Energiespeichermodul 2 ist in FIG 7 analog zu FIG 6 über einen Kühlkreislauf mit der Kühleinrichtung 9 verbunden, wobei in einer ersten Betriebsart ein im Kühlkreislauf vorgesehenes Ventil 12 geöffnet ist. Das Kühlmittel im Kühlkreislauf wird dabei durch die Pumpe 10 gefördert. In der ersten Betriebsart ist der erste Kühlkörper 3 über das im Kühlkreislauf strömende Kühlmittel thermisch an das Energiespeichermodul 2 angebunden. Der Kühlkörper 3 ist wiederum mit der kalten Seite 501 entsprechender Peltier-Elemente 5 verbunden, deren gegenüberliegende warme Seite an dem zweiten Kühlkörper 4 anliegt. In der Betriebsart mit geöffnetem Ventil durchströmt das Kühlmittel neben dem Kühlkörper 3 und dem Energiespeichermodul 2 auch den Kühlkörper 4, wobei dieser Kühlkörper durch den bereits beschriebenen Rückkühler 11 gekühlt wird, der benachbart zum Kühlkörper 4 liegt. Diese Betriebsart wird bei bestromten Peltier-Elementen verwendet, um hierdurch eine effiziente Kühlung des Energiespeichermoduls zu erreichen.

Bei niedrigeren Umgebungstemperaturen wird demgegenüber der Kühlkreislauf in einer zweiten Betriebsart betrieben, bei der das Ventil 12 geschlossen ist. In diesem Fall umfasst der Kühlkreislauf nur noch den zweiten Kühlkörper 4 mit benachbartem Rückkühler 11 sowie die Pumpe 10 und das Energiespeichermodul 2. Die Peltier-Elemente 5 sind in dieser Betriebsart unbestromt und die Kühlung des Kühlmittels wird dabei lediglich durch den Rückkühler 11 bewirkt, der eine ausreichende Kühlleistung bei niedrigeren Umgebungstemperaturen bereitstellt. Die Ausführungsform der FIG 7 ermöglicht eine kompakte Ausgestaltung der Kühleinrichtung, da der Rückkühler nicht als separates Bauteil vorgesehen ist, sondern Bestandteil der Kühleinrichtung ist.

## Patentansprüche

1. Elektrischer Energiespeicher (2) für ein Antriebssystem mit
- einer Energiespeichereinrichtung (201),
- einem Kühlkörper (3),
- wenigstens einem im Wärmefluss zwischen der Energiespeichereinrichtung (201) und dem Kühlkörper (3) angeordnetem Peltier-Element (5), und
- einer Steuereinheit,
**dadurch gekennzeichnet, dass** die Steuereinheit geeignet ist, das zumindest eine Peltier-Element (5) abzuschalten, wenn die Umgebungstemperatur einen vorgegebenen Temperaturwert unterschreitet oder kleiner gleich dem vorgegebenen Temperaturwert ist.

2. Elektrischer Energiespeicher (2) nach Anspruch 1, weiter aufweisend eine elektrisch isolierende Zwischenschicht (6), welche zwischen dem Peltier-Element (5) und der Energiespeichereinrichtung (201) angeordnet ist, wobei die Zwischenschicht (6) vorzugsweise ein verformbares Material aufweist.

3. Elektrischer Energiespeicher (2) nach Anspruch 2, **dadurch gekennzeichnet, dass** die elektrisch isolierende Zwischenschicht ein Gap-Pad aus nachgiebigem Kunststoff umfasst.

4. Elektrischer Energiespeicher (2) nach Anspruch 3, **dadurch gekennzeichnet, dass** das Gap-Pad verformbares Material aufweist.

5. Elektrischer Energiespeicher (2) nach Anspruch 4, **dadurch gekennzeichnet, dass** das verformbare Material des Gap-Pads nachgiebigen Kunststoff, insbesondere Silikon, umfasst.

6. Elektrischer Energiespeicher (2) nach einem der vorhergehenden Ansprüche, weiter aufweisend ein einen Innenraum umschließendes Gehäuse (203), wobei die Energiespeichereinrichtung (201) und das Peltier-Element (5) in dem Innenraum angeordnet sind, und wobei der Kühlkörper (3) ein Bestandteil des Gehäuses ist.

7. Elektrischer Energiespeicher (2) nach einem der vorhergehenden Ansprüche, wobei der Kühlkörper ein Flüssigkeitskühlkörper (3) oder ein Luftkühlkörper ist.

8. Elektrischer Energiespeicher (2) nach einem der vorhergehenden Ansprüche, wobei die Energiespeichereinrichtung (201) einen Doppelschichtkondensator und/oder eine aufladbare Batterie umfasst.

9. Elektrischer Energiespeicher (2) nach einem der vorhergehenden Ansprüche, **dadurch gekennzeichnet, dass** eine oder mehrere Kühleinrichtungen (3, 4, 5) mit jeweils einem weiteren, thermisch an die Energiespeichereinrichtung (201) angebundenen oder anbindbaren Kühlkörper (3) vorgesehen ist, dass die jeweilige Kühleinrichtung (3, 4, 5) ferner den Kühlkörper (4) und zumindest das Peltier-Element (5) umfasst, welches eine erste, sich im Betrieb des Peltier-Elements (5) abkühlende Seite (501) und eine zweite, sich im Betrieb des Peltier-Elements (5) erwärmende Seite (502) aufweist, wobei das zumindest eine Peltier-Element (5) derart zwischen dem ersten Kühlkörper (3) und dem zweiten Kühlkörper (4) angeordnet ist, dass die erste Seite (501) auf den ersten Kühlkörper (3) zuweist und die zweite Seite (502) auf den zweiten Kühlkörper (4) zuweist.

10. Elektrischer Energiespeicher (2) nach einem der vorhergehenden Ansprüche, **dadurch gekennzeichnet, dass** zumindest eine Kühleinrichtung (3, 4, 5) derart ausgestaltet ist, dass der erste Kühlkörper (3) mit dem Energiespeichermodul (2) mechanisch verbunden ist, insbesondere über eine verformbare Zwischenschicht (6).

11. Elektrischer Energiespeicher (2) nach Anspruch 9 oder 10, **dadurch gekennzeichnet, dass** zumindest eine Kühleinrichtung (3, 4, 5) derart ausgestaltet ist, dass die erste Seite (501) des zumindest einen Peltier-Elements (5) mit dem ersten Kühlkörper (3) und/oder die zweite Seite (501) des zumindest einen Peltier-Elements (5) mit dem zweiten Kühlkörper (4) mechanisch verbunden ist, insbesondere über eine Zwischenschicht (7, 8), vorzugsweise über eine Zwischenschicht (7, 8) aus Lot und/oder Wärmeleitpaste und/oder verformbarem Material.

12. Elektrischer Energiespeicher (2) nach einem der vorhergehenden Ansprüche 9 bis 11, **dadurch gekennzeichnet, dass** zumindest eine Kühleinrichtung (3, 4, 5) derart ausgestaltet ist, dass der erste und/oder zweite Kühlkörper (3, 4) ein Kühlkörper ohne Kühlmitteldurchfluss ist, insbesondere ein metallischer Kühlkörper, vorzugsweise aus Kupfer und/oder Aluminium und/oder einer Legierung umfassend Kupfer und/oder Aluminium.

## Claims

1. Electrical energy store (2) for a drive system with
- an energy storage device (201),
- a cooling body (3),
- at least one Peltier element (5) disposed in the heat flow between the energy storage device (201) and the cooling body (3), and
- a control unit,
**characterized in that** the control unit is suitable for switching off the at least one Peltier element (5) if the ambient temperature falls below a predefined temperature value, or is less than or equal to the predefined temperature value.

2. Electrical energy store (2) according to Claim 1, further having an electrically insulating intermediate layer (6), which is disposed between the Peltier element (5) and the energy storage device (201), the intermediate layer (6) preferably having a deformable material.

3. Electrical energy store (2) according to Claim 2, **characterized in that** the electrically insulating intermediate layer comprises a gap pad of flexible plastic.

4. Electrical energy store (2) according to Claim 3, **characterized in that** the gap pad has deformable material.

5. Electrical energy store (2) according to Claim 4, **characterized in that** the deformable material of the gap pad comprises flexible plastic, in particular silicone.

6. Electrical energy store (2) according to any one of the preceding claims, further having a housing (203) that encloses an interior space, the energy storage device (201) and the Peltier element (5) being disposed in the interior space, and the cooling body (3) being a constituent part of the housing.

7. Electrical energy store (2) according to any one of the preceding claims, the cooling body being a liquid cooling body (3) or an air cooling body.

8. Electrical energy store (2) according to any one of the preceding claims, the energy storage device (201) comprising a double layer capacitor and/or a chargeable battery.

9. Electrical energy store (2) according to any one of the preceding claims, **characterized in that** one or more cooling devices (3, 4, 5) are provided, which each have a further cooling body (3) that is or that can be thermally coupled to the energy storage device (201), the respective cooling device (3, 4, 5) further comprises the cooling body (4) and at least the Peltier element (5), which has a first side (501) that cools down when the Peltier element (5) is in operation and a second side (502) that heats up when the Peltier element (5) is in operation, the at least one Peltier element (5) being disposed between the first cooling body (3) and the second cooling body (4) in such a way that the first side (501) faces toward the first cooling body (3) and the second side (502) faces toward the second cooling body (4).

10. Electrical energy store (2) according to any one of the preceding claims, **characterized in that** at least one cooling device (3, 4, 5) is designed in such a way that the first cooling body (3) is mechanically connected to the energy storage module (2), in particular via a deformable intermediate layer (6).

11. Electrical energy store (2) according to Claim 9 or 10, **characterized in that** at least one cooling device (3, 4, 5) is designed in such a way that the first side (501) of the at least one Peltier element (5) is mechanically connected to the first cooling body (3) and/or the second side (502) of the at least one Peltier element (5) is mechanically connected to the second cooling body (4), in particular via an intermediate layer (7, 8), preferably via an intermediate layer (7, 8) of solder and/or heatconducting paste and/or of deformable material.

12. Electrical energy store (2) according to any one of the preceding Claims 9 to 11, **characterized in that** at least one cooling device (3, 4, 5) is designed in such a way that the first and/or second cooling body (3, 4) is a cooling body without through-flow of coolant, in particular is a metallic cooling body, preferably made of copper and/or aluminum and/or an alloy comprising copper and/or aluminum.

## Revendications

1. Accumulateur (2) d'énergie électrique pour un système d'entraînement comprenant
- un dispositif (201) d'accumulation d'énergie,
- un refroidisseur (3),
- au moins un élément (5) Peltier monté dans le flux de chaleur entre le dispositif (201) d'accumulation d'énergie et le refroidisseur (3) et
- une unité de commande,
**caractérisé en ce que** l'unité de commande est propre à mettre hors circuit au moins un élément (5) Peltier lorsque la température ambiante devient inférieure à une valeur de température donnée à l'avance ou est presque égale à la valeur de température donnée à l'avance.

2. Accumulateur (2) d'énergie électrique suivant la revendication 1, ayant en outre une couche (6) intermédiaire isolante du point de vue électrique, qui est disposée entre l'élément (5) Peltier et le dispositif (201) d'accumulation d'énergie, la couche (6) intermédiaire ayant de préférence un matériau déformable.

3. Accumulateur (2) d'énergie électrique suivant la revendication 2,
**caractérisé en ce que** la couche intermédiaire isolante du point de vue électrique comprend un gap-pad en une matière plastique souple.

4. Accumulateur (2) d'énergie électrique suivant la revendication 3,
**caractérisé en ce que** le gap-pad comporte du matériau déformable.

5. Accumulateur (2) d'énergie électrique suivant la revendication 4,
**caractérisé en ce que** le matériau déformable du gap-pad comprend de la matière plastique souple, notamment du silicone.

6. Accumulateur (2) d'énergie électrique suivant l'une des revendications précédentes, comportant en outre une enveloppe (203) renfermant un espace intérieur, le dispositif (201) d'accumulation d'énergie et l'élément (5) Peltier étant disposés dans l'espace intérieur et le refroidisseur (3) étant une partie constitutive de l'enveloppe.

7. Accumulateur (2) d'énergie électrique suivant l'une des revendications précédentes, dans lequel le refroidisseur est un refroidisseur (3) à liquide ou un refroidisseur à air.

8. Accumulateur (2) d'énergie électrique suivant l'une des revendications précédentes, dans lequel le dispositif (201) d'accumulation d'énergie comprend un condensateur à couches doubles et/ou une batterie rechargeable.

9. Accumulateur (2) d'énergie électrique suivant l'une des revendications précédentes,
**caractérisé en ce qu'**un ou plusieurs dispositifs (3, 4, 5) de refroidissement est prévu avec respectivement un autre refroidisseur (3) relié thermiquement au dispositif (201) d'accumulation d'énergie ou pouvant l'être, **en ce que** le dispositif (3, 4, 5) respectif de refroidissement comprend en outre le refroidisseur (4) et au moins l'élément (5) Peltier, qui a un premier côté (501) de refroidissement lorsque l'élément (5) Peltier est en fonctionnement et un deuxième côté (502) d'échauffement lorsque l'élément (5) Peltier est en fonctionnement, le au moins un élément (5) Peltier étant disposé entre le première refroidisseur (3) et le deuxième refroidisseur (4), **en ce que** le premier côté (501) est tourné vers le premier refroidisseur (3) et le deuxième côté (502) vers le deuxième refroidisseur (4).

10. accumulateur (2) d'énergie électrique suivant l'une des revendications précédentes,
**caractérisé en ce qu'**au moins un dispositif (3, 4, 5) de refroidissement est conformé de manière à ce que le premier refroidisseur (3) soit relié mécaniquement au module (2) d'accumulation d'énergie, notamment par une couche (6) intermédiaire déformable.

11. Accumulateur (2) d'énergie électrique suivant les revendications 9 ou 10,
**caractérisé en ce qu'**au moins un dispositif (3, 4, 5) de refroidissement est conformé de manière à ce que le premier côté (501) dû au moins à un élément (5) Peltier soit relié mécaniquement au premier refroidisseur (3) et/ou de manière à ce que le deuxième côté (501) dû au moins à un élément (5) Peltier soit relié mécaniquement au deuxième refroidisseur (4), de préférence par une couche (7, 8) intermédiaire en brasure et/ou en une pâte conductrice de la chaleur et/ou en une matière déformable.

12. Accumulateur (2) d'énergie électrique suivant l'une des revendications précédentes 9 à 11,
**caractérisé en ce qu'**au moins un dispositif (3, 4, 5) de refroidissement est conformé de manière à ce que le premier et/ou le deuxième refroidisseur (3, 4) soit un refroidisseur sans passage de fluide de refroidissement, notamment un refroidisseur métallique, de préférence en cuivre et/ou en aluminium et/ou en un alliage comprenant du cuivre et/ou de l'aluminium.
